# EUROPÄISCHE PATENTSCHRIFT

(11) **EP 2 510 214 B1**
(45) Veröffentlichungstag und Bekanntmachung des Hinweises auf die Patenterteilung: **11.03.2015**
(21) Anmeldenummer: 10784823.6
(22) Anmeldetag: 06.12.2010
(51) Int. Cl.: F02M 35/022, F02M 35/10, F02M 35/16, B60K 13/02, B62D 33/063

(54) **FANGKORB**
CATCH BOX
PANIER COLLECTEUR

(30) Priorität: 09.12.2009 DE 102009057563
(43) Veröffentlichungstag der Anmeldung: 17.10.2012
(73) Patentinhaber: Mahle International GmbH, 70376 Stuttgart (DE)
(72) Erfinder: ENDERICH, Andreas, 73734 Esslingen (DE); KELLER, Conrad, 73033 Göppingen (DE); TAUER, Christian, 74321 Bietigheim-Bissingen (DE); TRAUB, Matthias, 71034 Böblingen (DE); WIRBEL, Daniel, 71384 Weinstadt (DE)
(74) Vertreter: BRP Renaud & Partner mbB Rechtsanwälte Patentanwälte Steuerberater
(86) Internationale Anmeldenummer: PCT/EP2010/068972
(87) Internationale Veröffentlichungsnummer: WO 2011/069965

(56) Entgegenhaltungen:
- WO-A1-01/84035
- DE-C1- 4 234 045
- JP-U- 3 007 295
- JP-U- H0 735 750
- JP-U- H01 134 515
- US-A- 5 794 733

## Beschreibung

Die vorliegende Erfindung betrifft einen Fangkorb zum Ausrichten und erleichterten miteinander Verbinden zweier Luftansaugabschnitte einer Luftansaugung, insbesondere an einem Lastkraftwagen, gemäß dem Oberbegriff des Anspruchs 1. Die Erfindung betrifft außerdem eine mit einem derartigen Fangkorb ausgestattete Luftansaugung.

Insbesondere bei Luftansauganlagen eines Lastkraftwagens, hinter bzw. über einer Fahrerkabine sorgt ein Faltenbalg für einen erforderlichen Bewegungsausgleich zwischen einem kabinenfesten ersten Luftansaugabschnitt und einem rahmenfesten zweiten Luftansaugabschnitt, beispielsweise einem Luftfilter. Damit dieser Faltenbalg nach einem Kippen der Fahrerkabine sicher seinen ursprünglichen Platz wieder findet, wird dort ein sogenannter Fangkorb eingesetzt, der bei einem aufeinander zuführen der beiden Luftansaugabschnitte diese zueinander ausrichtet und dadurch ein leichtes Verbinden ermöglicht. Ein gattungsgemäßer Fangkorb ist z.B. aus WO 01/84035 A1 bekannt. Der Fangkorb hat dabei bisher ausschließlich die Aufgabe genau dieses miteinander verbinden zu erleichtern.

Die vorliegende Erfindung beschäftigt sich mit dem Problem, für einen Fangkorb der gattungsgemäßen Art, eine verbesserte oder zumindest eine alternative Ausführungsform anzugeben, die sich insbesondere durch eine Zusatzfunktion auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen an sich bekannten Fangkorb zum Ausrichten und erleichterten miteinander Verbinden zweiter Luftansaugabschnitte einer Luftansaugung, insbesondere an einem LKW, zugleich als Wasserabscheider auszubilden und dadurch diesem die Zusatzfunktion des Wasserabscheidens bzw. des Austragens des Wassers aus dem Luftsystem zuzuweisen. In diesem Fall ist somit der erfindungsgemäße Fangkorb nicht nur in der Lage, die beiden Luftansaugabschnitte der Luftansaugung zielsicher aufeinander zuzuführen und miteinander zu verbinden, sondern zugleich auch eine Wasserabscheidung und Wasseraustragung im angesaugten Luftstrom vorzunehmen, so dass die einem Verbrennungsmotor zugeführte Luft weniger Feuchtigkeit aufweist, wodurch die Verbrennung verbessert und insbesondere ein Korrosionsrisiko gesenkt werden können. Die Zuweisung der Wasserabscheidefunktion lässt sich dabei konstruktiv äußerst einfach erreichen, so dass der erfindungsgemäße Fangkorb sich bezüglich beispielsweise der Herstellungskosten nicht oder nur marginal vom gattungsgemäßen Fangkorb unterscheidet.

Bei der erfindungsgemäßen Lösung, weist der Fangkorb eine walmdachartige Trägerstruktur auf, wobei Träger der Trägerstruktur rinnenartig ausgebildet sind, das heißt insbesondere einen U-förmigen Querschnitt aufweisen. Die Träger der Trägerstruktur dienen somit als Wasserablaufrinnen, in welchem das aus dem angesaugten Luftstrom abgeschiedene Wasser gesammelt und gleichzeitig abgeführt werden kann. Die Träger der Trägerstruktur sind dabei beispielsweise sparrenartig bzw. pfettenartig angeordnet und insbesondere wasserleitend miteinander verbunden, so dass die einzelnen Träger der Trägerstruktur ein Wasserableitesystem bilden, das das aus dem angesaugten Luftstrom abgeschiedene Wasser abführt. Selbstverständlich können dabei die Träger nicht nur gerade, sondern auch gebogen und/oder geneigt ausgeführt sein. Bei vorteilhaften Weiterbildungen sind die einzelnen sparrenartige Träger mit einer oder mehreren Rippen bzw. Pfetten verbunden, wodurch die mechanische Stabilität des Fangkorbes erhöht wird.

Gemäß einer besonderen Ausgestaltung verfügt der Fangkorb über zwei, in Durchströmungsrichtung versetzt zueinander angeordnete Abscheideebenen. Diese Abscheideebenen werden durch erste und zweite Träger gebildet, wobei die ersten und zweiten Träger von einer gemeinsamen Ebene ausgehen und über unterschiedliche Höhen verfügen. Hierbei ist es vorteilhaft, wenn die ersten und zweiten Träger abwechselnd nebeneinander angeordnet sind, wobei der Abstand zwischen den ersten Trägern vorzugsweise der Breite der zweiten Träger und der Abstand zwischen den zweiten Trägern etwa der Breite der ersten Träger entspricht. Somit ist die angesaugte Luft gezwungen, die Strömungsrichtung zu ändern, wobei die in der Luft enthaltenen Wassertropfen auf die Träger prallen und so abgeschieden werden. Vorzugsweise können die ersten und zweiten Träger durch einen gemeinsamen First miteinander verbunden sein.

Bei anderen Ausgestaltungen kann die Trägerstruktur auch kegel- bzw. kegelstumpfförmig, pyramiden- bzw. pyramidenstumpfförmig oder mit beliebigen Geometrien ausgebildet sein. Hierbei können die Grundfläche sowie die Zwischenebenen der Träger bzw. der Trägerstruktur z. B. rund bzw. oval, nierenförmig oder rechteckig ausgeführt sein.

Bei einer weiteren vorteilhaften Ausführungsform der erfindungsgemäßen Lösung, weist der Fangkorb einen umlaufenden, rinnenartig ausgebildeten Rand auf. Dieser Rand dient dem Sammeln des an der Wand der Luftansaugabschnitte abgeschiedenen Wassers bzw. des von den Träger der Trägerstruktur abgeleiteten Wassers, wobei die rinnenartig ausgebildeten Träger in den rinnenartig ausgebildeten, umlaufenden Rand münden und dadurch das aus dem Luftstrom abgeschiedene Wasser in den umlaufenden Rand ableiten. Die Träger der Trägerstruktur und der umlaufende, rinnenartig ausgebildete Rand können dabei einstückig, das heißt insbesondere als zusammenhängendes Kunststoffspritzgussteil, ausgebildet sein, oder aber auch als separate Bauteile, so dass die Trägerstruktur und der umlaufende Rand separat hergestellt und anschließend miteinander verbunden, insbesondere miteinander verclippst, verschweißt bzw. verklebt werden können.

Gemäß einer vorteilhaften Ausgestaltung der Erfindung sind die in unterschiedlichen Ebenen angeordneten Träger derart ausgestaltet, dass sie in Strömungsrichtung versetzt zueinander angeordnet sind. Somit ist die Luftströmung diversen Trägern ausgesetzt, an welchen sich die Wassertropfen abscheiden können. Bei einer besonderen Weiterbildung der Erfindung überlappen sich die in verschiedenen Ebenen angeordneten Träger in Strömungsrichtung, so dass die enthaltenen Wassertropfen auf einen Träger auftreffen und die Luft ohne großen Druckverlust zwischen den Trägern hindurch strömen kann. Bei anderen Ausbildungen schließen die verschiedenen Ebenen in Durchströmungsrichtung gesehen direkt aneinander an. Durch derartige Ausgestaltungen wird eine sehr effektive Luftentfeuchtung bzw. Wasserabscheidung erreicht.

Gemäß einer alternativen Ausbildung der Erfindung sind die in verschiedenen Ebenen angeordneten Träger in Strömungsrichtung zueinander beabstandet. Somit wird der durch den Fangkorb gebildete Strömungswiderstand deutlich reduziert.

Bei weiteren Ausbildungen der Erfindung verfügt der Fangkorb über einen Montagewulst, über den der Faltenbalg gezogen und mittels einer Schelle auf dem Fangkorb fixiert wird.

Gemäß anderen Ausgestaltungen kann zusätzlich zu dem Fangkorb ein Wasser-Abscheidekorb vorgesehen sein, der lösbar oder unlösbar mit einem der Luftansaugabschnitte verbunden ist. Diese Verbindung kann z. B. durch eine Verschweißung, Verklebung, Verschraubung oder Verspannung realisiert sein. Bei einer lösbaren Verbindung ist es vorteilhaft, dass der Wasser-Abscheidekorb demontiert werden kann und so von außen zugänglich von groben Verunreinigungen befreit werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht eines erfindungsgemäßen Fangkorbs,
- Fig. 2: eine Darstellung einer Luftansaugung mit einem derartigen, erfindungsgemäßen Fangkorb,
- Fig. 3: einen Ausschnitt einer alternativen Ausgestaltung des Fangkorbs in perspektivischer Darstellung,
- Fig. 4: eine Seitenansicht des Fangkorbs gemäß Figur 3,
- Fig. 5: eine Seitenansicht eines alternativ ausgestalteten Fangkorbs,
- Fig. 6: eine Draufsicht auf den Fangkorb gemäß Figur 5,
- Fig. 7: eine alternative Luftansaugung in perspektivischer Ansicht.

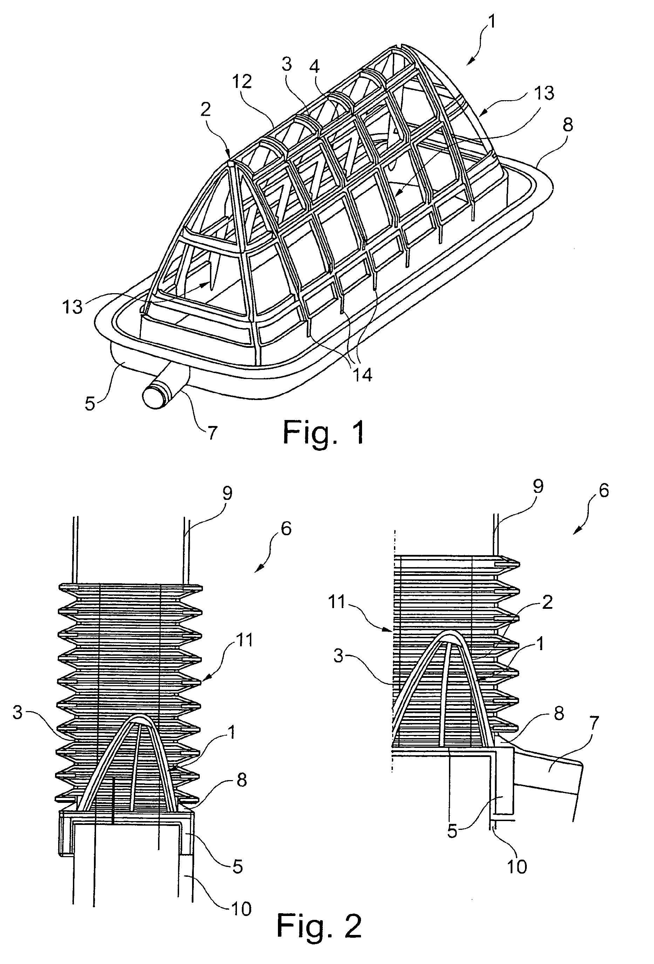

Entsprechend der Fig. 1, weist ein erfindungsgemäßer Fangkorb 1 eine walmdachartige Trägerstruktur 2 auf, mit einzelnen Trägern 3 und 4, die rinnenartig ausgebildet sind und insbesondere einen U-förmigen Querschnitt aufweisen. Die Träger 3 sind dabei sparrenartig ausgebildet, wogegen die Träger 4 in der Art von Pfetten ausgebildet sind, wobei allen Trägern 3 und 4 gemeinsam ist, dass diese bei diesem Ausführungsbeispiel wasserleitend untereinander bzw. miteinander verbunden sind. Bei anderen Ausführungen können die Träger 3, 4 auch durch Knoten-Punkte verbunden sein, in welchen keine Wasserleitung erfolgt.

Die walmdachartige Trägerstruktur 2 verfügt über einen First 12, welcher bei diesem Ausführungsbeispiel durch einen U-förmigen Träger 4 gebildet ist, und vier zum First 12 geneigte Flächen 13, welche durch die Träger 3, 4 aufgespannt werden. Bei einer anderen Ausführung kann der First 12 auch ohne Träger 4 gebildet sein. Hierbei sind dann die Träger 3 derart gebogen ausgeführt, dass eine gedachte First-Linie gebildet wird, von welcher aus sich die Flächen 13 erstrecken. Die als Pfetten ausgebildeten Träger 4 verlaufen bei dem dargestellten Ausführungsbeispiel parallel zum First 12. Es ist aber auch möglich, die Pfetten winklig zum First anzuordnen. Hierbei kann der Neigungswinkel dahingehend ausgerichtet werden, dass die abgeschiedenen Wassertropfen durch die Schwerkraft und/oder die Luftströmung nach außen fließen. Die als Pfetten ausgebildeten Träger 3 verlaufen bei dem dargestellten Ausführungsbeispiel rechtwinklig zum First 12. Bei alternativen Ausführungen können sie jedoch auch in anderen Winkeln angeordnet werden, um so einen besseren Wasserabtransport bzw. eine bessere Stabilität des Fangkorbes 1 zu erreichen.

Darüber hinaus weist der Fangkorb 1 einen umlaufenden, rinnenartig ausgebildeten Rand 5 auf, wobei die rinnenartig ausgebildeten Träger 3 und 4 eine Wasserableitung in diesen Rand 5 bewirken bzw. ermöglichen. Gemäß einer besonderen Ausgestaltung verfügen die Träger 3 über jeweils eine Austragsöffnung 14, welche in den Rand 5 mündet. Mit der Trägerstruktur 2 und dem umlaufenden Rand 5 ist es möglich, den Fangkorb 1 zugleich erfindungsgemäß als Wasserabscheider auszubilden, so dass dieser beim Einsatz in einer Luftansaugung 6 (vgl. Fig. 2) in der Lage ist, Feuchtigkeit bzw. Wasser aus einem angesaugten Luftstrom abzuscheiden.

Der erfindungsgemäße Fangkorb 1 kann aus Kunststoff, insbesondere als Kunststoffspritzgussteil, ausgebildet sein und dadurch einerseits kostengünstig und andererseits maßhaltig und präzise herstellt werden. Der umlaufende, rinnenartig ausgebildete Rand 5 weist darüber hinaus einen Ablauf 7 auf, über welchem das im Rand 5 gesammelte Wasser abgeleitet werden kann. Der Ablauf 7 ist bei dem vorliegenden Ausführungsbeispiel als Stutzen ausgebildet, auf welchen z.B. ein Ablaufschlauch (nicht dargestellt) aufgesteckt werden kann. Bei anderen Ausführungen kann der Ablauf 7 auch als Bohrung ausgeführt sein, in welche ein Ablaufschlauch mit einer entsprechenden Kupplung einsteckbar ist. Darüber hinaus kann am Fangkorb 1 ein Dichtelement 8 vorgesehen sein, über welches zwei Luftansaugabschnitte 9 und 10 (vgl. Fig. 2) dicht miteinander verbunden werden können.

Generell kann die Trägerstruktur 2 und der Rand 5 als einstückiges Bauteil, insbesondere als Kunststoffspritzgussteil, ausgebildet sein, wobei auch denkbar ist, dass die Trägerstruktur 2 separat hergestellt und anschließend mit dem Rand 5 verbunden, insbesondere verschraubt, verclippst, verschweißt oder verklebt wird.

Der erfindungsgemäße Fangkorb 1 wird insbesondere in einer Luftansaugung 6, beispielsweise bei einem Lastkraftwagen, mit einem ersten, einen Faltenbalg 11 zum Toleranzausgleich aufweisenden Luftansaugabschnitt 9 und einem zweiten Ansaugabschnitt 10 eingesetzt. Dabei ist der erste Luftansaugabschnitt 9 über den Faltenbalg 11 mit einem freien Ende des zweiten Luftansaugabschnittes 10 verbunden, wobei im Bereich des freien Endes des zweiten Luftansaugabschnittes 10 der erfindungsgemäße Fangkorb 1 gemäß der Fig. 1 angeordnet ist und beim Verbinden der beiden Luftansaugabschnitte 9 und 10 ein Ausrichten der beiden zueinander bewirkt und dadurch das Verbinden erleichtert. Eine derartige Luftansaugung 6 kann - wie oben erwähnt - beispielsweise im Bereich eines Lastkraftwagens, insbesondere im Bereich einer Rohluftansaugung hinter bzw. über einer Fahrerkabine vorgesehen sein, wobei der Faltenbalg 11 für den Bewegungsausgleich zwischen den beiden Luftansaugabschnitten 9 und 10, das heißt beispielsweise zwischen einer fahrerhausseitigen Ansaugung und einer rahmenseitigen Anschlussstelle (z.B. einem Luftfilter) sorgt. Damit der Faltenbalg 11 nach dem Kippen des Fahrerhauses wieder sicher an seinen ursprünglichen Platz findet, wird dort der erfindungsgemäße Fangkorb 1 eingesetzt. Von besonderem Vorteil ist bei diesem jedoch, dass dieser zusätzlich als Wasserabscheider ausgebildet ist und daher in der Lage ist, einer angesaugten Rohluft Wasser zu entziehen, was sich günstig auf einen Verbrennungsprozess und auf ein Korrosionsrisiko auswirkt.

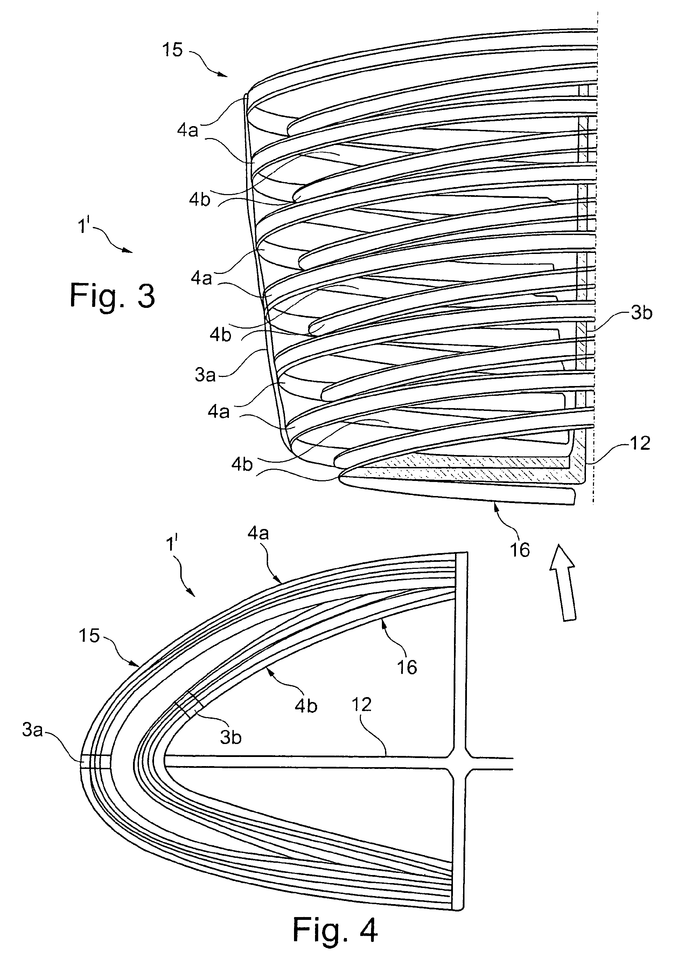

In Figur 3 ist ein Ausschnitt einer alternativen Ausgestaltung des Fangkorbes 1' in perspektivischer Ansicht dargestellt. Bei diesem Ausführungsbeispiel verfügt der Fangkorb 1' über äußere sparrenartige Träger 4a und über innere Träger 4b. Die äußeren Träger 4a bilden einen äußeren Abscheidekörper 15 und die inneren Träger 4b bilden einen inneren Abscheidekörper 16. Beide Abscheidekörper 15, 16 verfügen über die gleiche geometrische Form, bei diesem Beispiel ein Oval, wobei der innere Abscheidekörper 16 kleiner als der äußere Abscheidekörper 15 ausgeführt ist. Die Träger 4a bzw. 4b verlaufen parallel oder geneigt zu einem gedachten oder existierenden First 12. Zwischen den Trägern 4a bzw. 4b können einer oder mehrere pfettenartige Längsträger 3a oder 3b vorgesehen sein, welche die jeweilige Trägergruppe verbindet. Bei der dargestellten Ausführung sind die Träger 4a in Strömungsrichtung versetzt zu den Trägern 4b angeordnet, wodurch die Luft auf einen geringen Strömungswiderstand trifft und mit einer Wellenbewegung durch den Fangkorb 1' strömt. Weiterhin sind die Träger 4a bzw. 4b einer Trägergruppe versetzt zu dem vorangehenden Träger 4a bzw. 4b angeordnet. Dies wird dadurch erreicht, dass der nachfolgende Träger 4a bzw. 4b über einen größeren Außen-Querschnitt verfügt, als der vorangegangene Träger 4a bzw. 4b. Dadurch werden die Wassertropfen immer weiter in Richtung des Randes 5 getragen. Der Versatz zwischen den Trägern 4a bzw. 4b innerhalb einer Trägergruppe bzw. zwischen den Trägern 4a, 4b der jeweils anderen Trägergruppe kann beliebig kombiniert werden. Bei der dargestellten Ausführung ist der Abstand zwischen den Trägern 4a bzw. 4b einer Trägergruppe größer, als die Breite der dazwischen angeordneten Träger 4b bzw. 4a der anderen Trägergruppe.

In Figur 4 ist der Fangkorb 1' gemäß Figur 3 in der Seitenansicht dargestellt. Die Träger 4a bzw. 4b einer Trägergruppe sind derart angeordnet, dass sie sich in Strömungsrichtung überlappen und so viele Wassertropfen abscheiden. Die Träger 4b sind bei diesem Ausführungsbeispiel mit dem First 12 verbunden. Die Träger 4a sind bei diesem Ausführungsbeispiel nicht mit dem First 12 verbunden. Bei anderen Ausführungsbeispielen können beide, keine oder nur eine beliebige Trägergruppe mit dem First 12 verbunden sein.

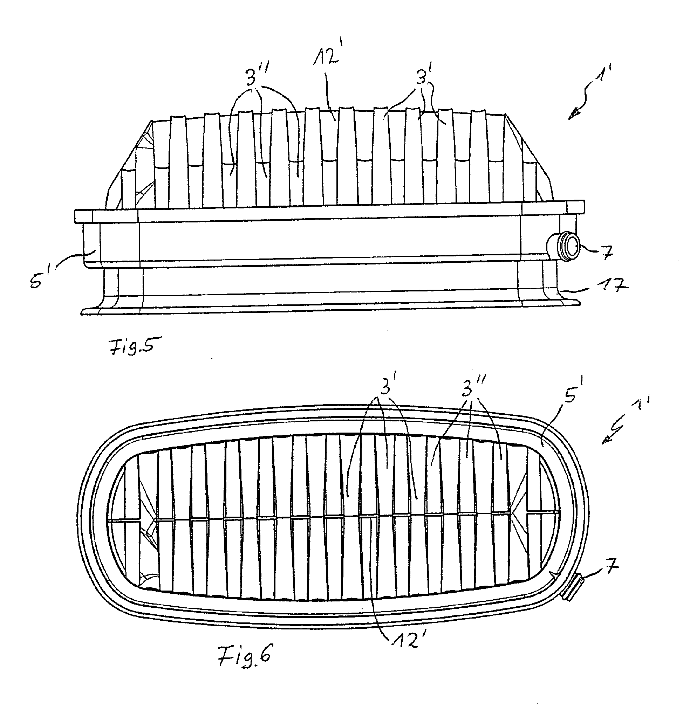

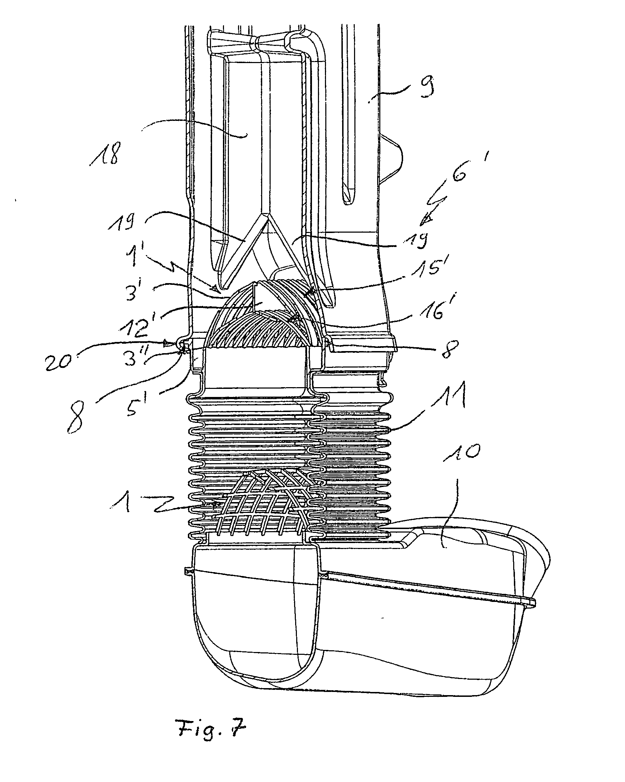

In Fig. 5 und Fig. 6 ist eine alternative Ausgestaltung des Fangkorbes 1' dargestellt. Der Fig. 1 entsprechende Bauteile sind mit gleichen Bezugszeichen versehen. Die Träger 3' bilden den äußeren Abscheidekörper 15'. Die Träger 3" bilden den inneren Abscheidekörper 16'. Der Abstand zwischen den Trägern 3' entspricht im Wesentlichen der Breite der Träger 3". Gleiches gilt auch für den Abstand zwischen den Trägern 3". Im vorliegenden Ausführungsbeispiel verfügen die Träger 3' und 3" über ca. die gleiche Breite. Bei anderen Ausgestaltungen können die Breiten der Träger 3' bzw. 3" jedoch auch unterschiedlich ausgeführt sein. Die Träger 3' und 3" sind durch den First 12', welcher rippenartig ausgebildet ist, miteinander verbunden. Der Fangkorb 1' verfügt unterhalb des Randes 5' über einen Kragen 17, über welchen der Faltenbalg 11 gemäß Figur 7 gezogen wird und mittels einer Schelle (nicht dargestellt) daran fixiert wird.

In Fig. 6 ist eine alternative Luftansaugung 6' dargestellt. Der Fig. 2 entsprechende Bauteile sind mit gleichen Bezugszeichen versehen. Bei dieser Ausgestaltung verfügt die Luftansaugung 6' über einen Fangkorb 1, der mit dem zweiten Luftansaugabschnitt 10 verbunden ist. Der Faltenbalg 11 wird bei der Montage über diesen Fangkorb 1 gestülpt und fixiert, wie vorstehend beschrieben. Zusätzlich zu diesem Fangkorb 1 verfügt die Luftansaugung 6' einen als Wasser-Abscheidekorb 1' ausgebildeten Fangkorb, der gemäß den Fig. 5 und 6 ausgebildet ist. Der Wasser-Abscheidekorb 1' ist einerseits lösbar mit dem ersten Luftansaugabschnitt 9 und andererseits mit dem Faltenbalg 11 verbunden. Bei dieser Ausgestaltung übernimmt der Wasser-Abscheidekorb 1' die Hauptaufgabe, in der Ansaugluft enthaltenes Wasser an den Trägern 3' und 3" abzuscheiden. Dieses Wasser wird über den Ablauf 7 aus der Luftansaugung 6' entfernt. Der in Strömungsrichtung dem Faltenbalg 11 nachfolgend angeordnete Fangkorb 1 hat nur eine untergeordnete Wasser-Abscheidefunktion, dafür jedoch die Hauptfunktion der Zentrierung des Faltenbalges 11. Bei anderen Ausgestaltungen könnte der Fangkorb 1 auch vollständig entfallen, so dass ausschließlich der in Strömungsrichtung vor dem Faltenbalg 11 angeordnete Wasser-Abscheidekorb 1' vorgesehen ist und die Funktion des Fangkorbes 1 erfüllt. Hierbei ist der Wasser-Abscheidekorb 1' lösbar mit dem ersten Luftansaugabschnitt 9 verbunden. Bei einer Demontage der Luftansaugung 6' wird der Luftansaugabschnitt 9 von dem Abscheidekorb 1' entfernt. Bei der Montage wird der Abscheidekorb 1' mit dem Luftansaugabschnitt 9 verbunden und mittels Spannbügel oder sonstigen Befestigungsmitteln (nicht dargestellt) fixiert. Somit erfüllt der in Strömungsrichtung vor dem Faltenbalg 11 angeordnete Wasser-Abscheidekorb 1' die Funktionen der erleichterten Montage und der Wasserabscheidung. Zur verbesserten Wasserabscheidung in der Luftansaugung 6' ist im Luftansaugabschnitt 9 eine Wandstruktur 18 vorgesehen, welche die einströmende Luft kanalisiert. An dieser Wandstruktur 18 scheiden sich ebenfalls Wassertropfen ab. Damit die Wassertropfen nicht in der Mitte des Luftansaugabschnitts 9 abtropfen, sind Ablaufschrägen 19 vorgesehen, welche die Wassertropfen zur Wand des Luftansaugabschnitts 9 leiten. Von der Wand aus laufen die Tropfen direkt in den Rand 5' des Wasser-Abscheidekorbes 1' ab. Weiterhin verfügt der Luftansaugabschnitt 9 über eine Aufnahmegeometrie 20 in welche das Dichtelement 8 mit einer Haltestruktur des Wasser-Abscheidekorbes 1' eingesetzt werden kann. Dies ist besonders vorteilhaft, wenn nur der Wasser-Abscheidekorb 1' vorgesehen ist und zur Montage der Luftansaugung der Faltenbalg 11 in Position gebracht werden muss. Hierzu kann dann der Abscheidekorb 1' in der Aufnahmegeometrie 20 eingehängt und in Position geschwenkt werden. Somit ist eine erleichterte Ausrichtung und Montage des Faltenbalges 11 erreicht.

## Patentansprüche

1. Fangkorb (1) zum Ausrichten und erleichterten Miteinanderverbinden zweier Luftansaugabschnitte (9,10) einer Luftansaugung (6), insbesondere an einem Lastkraftwagen, wobei
der Fangkorb (1) eine walmdachartige Trägerstruktur (2) aufweist, **dadurch gekennzeichnet, dass** der Fangkorb (1) zugleich als Wasserabscheider ausgebildet ist, wobei Träger (3,4) der Trägerstruktur (2) rinnenartig ausgebildet sind, insbesondere einen U-förmigen oder konkaven Querschnitt aufweisen, und
dass die Träger (3,4) der Trägerstruktur (2) sparrenartig bzw. pfettenartig angeordnet sind, insbesondere sind die Träger (3,4) wasserleitend miteinander verbunden.

2. Fangkorb nach Anspruch 1,
**dadurch gekennzeichnet,**
**dass** der Fangkorb (1) einen umlaufenden, rinnenartig ausgebildeten Rand (5) aufweist.

3. Fangkorb nach Anspruch 2,
**dadurch gekennzeichnet,**
**dass** die rinnenartig ausgebildeten Träger (3,4) eine Wasserableitung in den umlaufenden, rinnenartig ausgebildeten Rand (5) ermöglichen.

4. Fangkorb nach einem der Ansprüche 1 bis 3,
**dadurch gekennzeichnet,**
**dass** der Fangkorb (1) aus Kunststoff, insbesondere als Kunststoffspritzgussteil ausgebildet ist.

5. Fangkorb nach einem der Ansprüche 2 oder 3,
**dadurch gekennzeichnet,**
**dass** der umlaufende, rinnenartig ausgebildete Rand (5) einen Ablauf (7) zur Wasserabführung aufweist.

6. Fangkorb nach einem der Ansprüche 1 bis 5,
**dadurch gekennzeichnet,**
**dass** am Fangkorb (1) ein Dichtelement (8) vorgesehen ist.

7. Luftansaugung (6), insbesondere für einen Lastkraftwagen, mit einem ersten, einen Faltenbalg (11) zum Toleranzausgleich aufweisenden Luftansaugabschnitt (9), der über den Faltenbalg (11) mit einem freien Ende eines zweiten Luftansaugabschnittes (10) verbunden ist, wobei im Bereich des freien Endes des zweiten Luftansaugabschnittes (10) ein Fangkorb (1) nach einem der Ansprüche 1 bis 6 vorgesehen ist, der beim Verbinden der beiden Luftansaugabschnitte (9,10) ein Ausrichten der beiden zueinander bewirkt und dadurch das Verbinden erleichtert.

## Claims

1. A catch box (1) for aligning and easier connecting of two air intake sections (9, 10) of an air intake system (6), in particular on a commercial vehicle, whereat the catch box (1) has a hipped roof-like beam structure (2), **characterized in that** the catch box (1) is embodied as water separator at the same time, wherein beams (3, 4) of the beam structure (2) are designed channel-like, i.e. in particular have a U-shaped or concave cross section, wherein the beams (3, 4) of the beam structure (2) are arranged in the manner of spars and purlins, in particular, the beams (3, 4) are interconnected in a water-conducting manner.

2. The catch box according to Claim 1, **characterized in that** the catch box (1) has a circumferential rim (5) designed in the manner of a channel.

3. The catch box according to Claim 2, **characterized in that** the beams (3, 4) designed in the manner of a channel make possible a water discharge into the circumferential rim (5) designed in the manner of a channel.

4. The catch box according to any one of the Claims 1 to 3, **characterized in that** the catch box (1) is formed of plastic, in particular as plastic injection moulding.

5. The catch box according to Claim 3 or 4, **characterized in that** the circumferential rim (5) designed in the manner of a channel comprises a drain (7) for the water discharge.

6. The catch box according to any one of the Claims 1 to 5, **characterized in that** on the catch box (1) a sealing element (8) is provided.

7. An air intake system (6), in particular for a commercial vehicle, with a first air intake section (9) comprising bellows (11) for tolerance compensation, which is connected via the bellows (11) to a free end of a second air intake section (10), wherein in the region of the free end of the second air intake section (10) a catch box according to any one of the Claims 1 to 6 is provided, which on connecting the two air intake sections (9, 10) brings about an alignment of the two relative to each other, facilitating the joining because of this.

## Revendications

1. Panier collecteur (1) pour aligner et relier de manière facilitée l'une à l'autre deux sections de conduite d'aspiration d'air (9,10) d'une conduite d'aspiration d'air (6), notamment sur un véhicule poids lourd, dans lequel le panier collecteur (1) présente une structure porteuse (2) en forme de toit en croupe, **caractérisé en ce que** le panier collecteur (1) est réalisé simultanément comme un séparateur d'eau, dans lequel les supports (3,4) de la structure porteuse (2) sont conçus en forme de rainures, notamment présentent une section transversale en forme de U ou concave et **en ce que** les supports (3,4) de la structure porteuse (2) sont disposés à la manière de chevrons ou de pannes, notamment les supports (34) sont reliés les uns aux autres de manière conductrice d'eau.

2. Panier collecteur selon la revendication 1, **caractérisé en ce que** le panier collecteur(1) présente un bord (5) circonférentiel, conçu en forme de rigole.

3. Panier collecteur selon la revendication 2, **caractérisé en ce que** les supports (3,4) conçus en forme de rigole permettent une évacuation d'eau dans le bord (5) circonférentiel, conçu en forme de rigole.

4. Panier collecteur selon une des revendications 1 à 3, **caractérisé en ce que** le panier collecteur (1) est conçu en plastique, notamment comme une pièce moulée par injection en plastique.

5. Panier collecteur selon une des revendications 2 ou 3, **caractérisé en ce que** le bord (5) circonférentiel, conçu en forme de rigole présente une conduite d'évacuation (7) pour évacuer l'eau.

6. Panier collecteur selon une des revendications 1 à 5, **caractérisé en ce que** un élément d'étanchéité (8) est prévu sur le panier collecteur (1).

7. Conduite d'aspiration d'air (6), notamment pour un véhicule poids lourd, comportant une première section de conduite d'aspiration d'air (9) présentant un soufflet (11) à des fins d'harmonisation des tolérances, qui est reliée par l'intermédiaire du soufflet (11) avec une première extrémité libre d'une deuxième section d'aspiration d'air (10), dans laquelle au niveau de l'extrémité libre de la deuxième section d'aspiration d'air (10) un panier collecteur (1) selon une des revendications 1 à 6 est prévu, qui lors de la liaison des deux sections de conduite d'aspiration d'air (9,10) provoque un alignement de ces dernières l'une sur l'autre et facilite ainsi la liaison.
